# EUROPEAN PATENT APPLICATION

(11) **EP 2 199 494 A1**
(43) Date of publication of application: **23.06.2010**
(21) Application number: 08172289.4
(22) Date of filing: 19.12.2008
(51) Int. Cl.: E04H 4/00

(54) **Wave making device**

(71) Applicant: WOW Company s.a., 5000 Namur (BE)
(72) Inventor: Demarteau, Joël, B-5000, Namur (BE)

(57) **Abstract**

The wave making device comprises a caisson connected to an air blower and to a control valve mechanism comprising an exhaust valve adapted to move between a closed position and an open position, and a system adapted to move the exhaust valve and to maintain said exhaust valve into said position. The control valve mechanism is adapted to ensure continuously an air pressure within the caisson at least equal to the atmospheric pressure.

## Description

### FIELD OF THE INVENTION

The present invention relates to an artificial wave making device, and to a process for making artificial wave at the surface of a pool.

### BACKGROUND OF THE INVENTION

Artificial wave making devices are commercialized by the company "WOW Company". Said devices comprises a floating spherical element in which a system moves at least one body so as generate downwards and/or upwards movement of the floating spherical element, whereby generating artificial wave at the surface of the pool.

Artificial wave making devices have also been developed by using a high flow and high pressure air-blower to blow or draw air periodically in a given frequency to form waves. If the area of a pool is about 700 m², an air-blower having output power of 165 kW is required. Said devices have high energy consumption and require great investment, so it is not suitable for aquatic breeding.

U.S. Pat. No. 4,730,355 to Mark L, Kreinbihl et al. discloses an artificial wavemaking device comprising a motor, an air-blower, a four-way air directional valve assembly, pipes and wave chambers. However, the wave generated by said device is still based on the method of forced vibration. Therefore, said device has to be provided with an air-blow of great output power, and the cost of the device is still high.

U.S. Pat. No. 5,226,747 to Wang Yichang et al. discloses a wave making device using the principle of liquid resonance of the shock wave and the wave in the water pool to provide an artificial wave making method and apparatus based on adaptive resonance so as to lower the energy consumption for generating the artificial wave, and particularly, to only a few hundredths of that for generating waves by forced vibration.

The wave making device of Wang et al comprises:
- an air chamber,
- four butterfly valves,
- air pipes and
- an adaptive control system which comprises a float disposed on the water surface, a sensor, a control circuit, a first and a second electromagnetic actuators and a polarity switch of the sensor, said float being disposed at a distance from the air chamber.

The control circuit of Wang et al comprises a signal amplifier, a shaper, a first and a second power amplifiers, a phase inverter and an oscillator, said oscillator being switched on when starting to generate a certain exciting frequency transferred to the control circuit until the water wave excites feedback signals, and said oscillator being cut off once the device is started, and said sensor receiving the signals of the water wave from the float, and translating them to the signal amplifier and the shaper via the polarity switch of the sensor, the amplified and shaped signals being further transferred to the first power amplifier, and to the second power amplifier via a phase inversor, said first and second power amplifiers respectively actuating the first and the second actuators to control said four butterfly valves to open or close according to the rhythm of the water wave to form a shock wave in resonance with the water wave, said first and second valves being provided in the pipe at the discharge side of the air blower, and the third and the fourth valves being provided at the inlet side of the air blower, and said first and fourth valves being respectively communicated with the atmosphere, and said second and third valves being respectively communicated with the air chamber, therefore, the four valves forming the following four operation modes based on the rhythm of the water wave and according to the moving direction of the float being from higher portion to lower position or in reverse, and the position of the polarity switch of the sensor:

| Mode | Moving direction of the floot | Polarity switch of the senser | No of the Actuator being operated | State of valves | | | |
|---|---|---|---|---|---|---|---|
| | | | | No. 5 | 6 | 7 | 8 |
| 1 | High→Low | + | 3 | 1 | 0 | 1 | 0 |
| 2 | Low→High | + | 4 | 0 | 1 | 0 | 1 |
| 3 | High→Low | - | 4 | 0 | 1 | 0 | 1 |
| 4 | Low→High | - | 3 | 1 | 0 | 1 | 0 |

wherein: "1" means open; "0" means closed.

In the device of Wang et al, the blower is once used for blowing air into the chamber, and once used for drawing air outside the chamber.

In order to use one single blower, various valves are required.

The use of such a large number of valves increases the risk of mechanical problems, as well as the problem of correct control of the timing of the closing or opening of the valves, whereby causing variation which are detrimental for achieving the desired wave pattern.

Furthermore, as the blower is intended to suck periodically air from the chamber, so that liquid flows into the chamber, a risk exists that water or water droplets are sucked into the blower, causing then problems of corrosion, growth of bacteria, etc.

The invention relates to artificial wave making device simple of conception, with a low energy consumption and using a caisson containing air with always at least a low over pressure with respect to the ambient pressure.

### BRIEF DESCRIPTION OF THE INVENTION

The invention relates to an adaptive control artificial wave making device for generating wave with at least one specific wave pattern, at least at the surface of a liquid contained into a pool located in an air containing atmosphere having an ambient pressure, said surface of the liquid having an average liquid level. The pool is advantageously a swimming pool, but can also be an aquarium or a treatment pool, for example for treating waste liquid, liquids to be aerated, liquids to be mixed with floating foam, for displacing floating foam or material towards a receiving means, receptacle, etc.

The wave making device comprises at least:
- a caisson adapted to be mounted at least partly into a pool containing a liquid, said caisson having at least an upper portion and a bottom portion intended to be immersed in the liquid of the pool below the average liquid level in the pool.
   At least a part of the upper portion of the caisson is adapted to contain air when the bottom portion of the caisson is immersed into the liquid of the pool. Said caisson has a face, advantageously a bottom provided with an opening adapted, when the caisson is partly immersed into the liquid of the pool, to form a passage of liquid from the pool towards the caisson, and inversely. Liquid can thus flow in the caisson and out of the caisson. The caisson can possibly be divided in one or more distinct chamber with each one or more openings for the passage of liquid.
- an air blower adapted to create an outlet air flow with an over pressure comprised between 0.01 10⁵Pa and 0.5 10⁵Pa above the atmospheric pressure, advantageously an over pressure comprised between 0.05 10⁵Pa and 0.3 10⁵Pa above the atmospheric pressure.
- an air pipe connecting the air blower to the upper portion of the caisson, so as to introduce air into the upper portion of the caisson whereby generating in said upper portion of the caisson an air pressure at least equal to the atmospheric pressure, advantageously an over pressure comprised between 0.005 10⁵Pa and 0.5 10⁵Pa above the atmospheric pressure, advantageously an over pressure comprised between 0.01 10⁵Pa and 0.3 10⁵Pa above the atmospheric pressure.
- at least one control valve mechanism connected to the upper portion of the caisson. Said control valve mechanism comprises an exhaust valve adapted to move between at least a substantially closed position and a substantially full open position, and a system adapted to move the exhaust valve and to maintain said exhaust valve into one position selected from the group consisting of the substantially closed position, the substantially full open position and partly open positions comprised between the substantially closed position and the substantially full open position, whereby said control valve mechanism is adapted to ensure continuously air pressure within the caisson at least equal to the ambient pressure, advantageously at an over pressure with respect to the ambient pressure, preferably an over pressure comprised between 0.01 10⁵Pa and 0.3 10⁵Pa above the atmospheric pressure. According to a preferred embodiment the exhaust valve is moving between a fully closed position and a fully open position.
- a pressure sensor for determining a liquid pressure or a difference of pressure at a liquid level of the caisson or vertically below the bottom opening of the caisson, advantageously a submersible pressure sensor placed in the bottom portion of the caisson or below the bottom opening of the bottom portion of the caisson, at a determined level with respect to the bottom of the caisson, whereby at said determined level, liquid is always present when the caisson is placed in the pool for generating wave, the said submersible sensor measuring a difference of pressure of the liquid at the determined level into the caisson with respect to the ambient pressure and generating advantageously an electrical signal function of the measured difference of pressure, such as a signal of less than 100mA, advantageously of less than 50mA, a signal of less than 50V, for example comprised between -20V and + 20V. the signal can also directly be a digital signal. The sensor can also be not immersed, when for example using a tube open at its bottom end and connected at its upper portion to the pressure sensor.
- possibly a converter for converting the electrical signal of the pressure sensor, advantageously the submersible pressure sensor into a converted signal; and
- a controlled command system receiving a signal selected from the electrical signal of the submersible pressure sensor and the converted signal, said controlled command system determining the moments when the exhaust valve has to be moved into a position selected from the group consisting of the substantially full open position and partly open positions comprised between the substantially closed position and the substantially full open position, and/or the moments when the exhaust valve has to be moved into its substantially closed position, for achieving said specific wave pattern, and emits a signal towards the control valve mechanism for commanding the movement of the exhaust valve or valves for achieving said specific wave pattern.

According to an embodiment, the system adapted to move the exhaust valve and to maintain said exhaust valve into one position selected from the group consisting of the substantially closed position, the substantially full open position and partly open positions comprised between the substantially closed position and the substantially full open position comprises at least one cylinder. Said cylinder acts advantageously against the action of a return mechanism, said return mechanism being advantageously adapted for directing the valve towards its substantially closed position.
Other systems for controlling the movement of the exhaust valve than one or more cylinders are possible. For example, the movement of the valve can be operated by a motor moving one element connected to the valve, for example a linear motor, etc.

According to an advantageous detail, the caisson is provided with an exhaust pipe for the exhaust of air from the caisson, whereby the cylinder is located within the exhaust pipe.

According to another detail of an embodiment, the ratio open surface of the exhaust valves or valves expressed in cm² / volume of the upper portion of the caisson is greater than 0.0005, advantageously greater than 0.001, preferably comprised between 0.005 and 0.05. With such a ratio, it is possible to ensure a rapid exhaust of air from the caisson.

According to a further detail of an advantageous embodiment, the control valve mechanism comprises a pipe connecting the valve with the caisson, said pipe being provided at its end connected to the caisson, with a liquid blocking system adapted to prevent the passage of liquid and gas towards the valve, when the liquid level in the caisson is above a predetermined level. This is advantageous for ensuring a minimum air volume within the caisson.

According to a further detail of an advantageous embodiment, the bottom of the caisson is open, said bottom being provided with a series of elements defining passages with a maximum width or diameter of less than 10cm. The bottom is for example provided with a open grid for preventing the passage of large object into the caisson.

According to an embodiment, the blower is adapted to blow a volume of air of at least 30 litres per second (for example comprised between 100 litres and 500 litres per second) per 200 litres of the upper portion of the caisson.

According to an advantageous detail, the bottom of the caisson has an opening having an open surface corresponding to 3% to 10%, advantageously 4% to 7% of the surface of the liquid of the pool. This value is for a tank or caisson with small losses of energy. If the tank or caisson has bigger losses, the ratio has to be higher, for example between 10 to 20%.

If the pool is located in a room, in a closed or substantially closed room, the device comprises then advantageously an exhaust pipe for exhausting air from the caisson outside the said room.

The controlled command system comprises preferably instructions for maintaining the exhaust valve or valves of the caisson in its substantially closed position for a time sufficient so that a sufficient amount of air from the blower is introduced into the caisson, so that part of said air is exhausted into the pool through the bottom opening. This is advantageous for expelling out of the caisson or out of the grid, possible materials or components floating within the caisson or blocking partly the grid.

Preferably, the instructions for maintaining the exhaust valve or valves of the caisson in its substantially closed position for a time sufficient so that a sufficient amount of air from the blower is introduced into the caisson are adapted for exhausting air into the pool for at least 1 second to 10 minutes, preferably 5 second to 1 minute, per period of at least 45minutes, advantageously per period comprised between 1hour and 24hours.

This is advantageous for controlling the good working of the blower and of the exhaust valve(s) from time to time.

According to a specific embodiment, the caisson has a lateral wall in contact with the liquid of the pool outside the caisson, the said wall having an opening with a portion at least located below the average liquid level and an opening with a portion located above the average liquid level of the pool, or having at least a first opening located above the average liquid level of the pool and a second opening located below the average liquid level, and in which the said opening or openings are provided with movable closing means, whereby enabling the passage of water from the pool into the caisson when the opening or openings are not closed by the movable closing means.

According to a further specific embodiment, the device further comprises at least one filtering means or a treatment unit for filtering or treating air flowing into the blower and/or pushed by the blower. The air exhausted can also be treated if required.

The adaptive control artificial wave making device of the invention can also comprise two or more distinct caissons connected to a same air blower, or to different blowers, through a piping system provided with a valving system for controlling the flow of air towards the first caisson and the flow of air towards the second caisson, whereby each caisson has at least one control valve mechanism connected to the upper portion of the caisson. Said control valve mechanism comprises:
- an exhaust valve adapted to move between at least a substantially closed position and a substantially full open position, and
- a system adapted to move the exhaust valve and to maintain said exhaust valve into one position selected from the group consisting of the substantially closed position, the substantially full open position and partly open positions comprised between the substantially closed position, the substantially full open position.

The invention also relates to the use of the adaptive control artificial wave making device of the invention for generating artificial wave at the surface of a pool, which could be located in a room. The air from the caisson is advantageously exhausted outside the room or towards a treatment station.

Details and particulars of the present invention will become apparent with the following description of the presently preferred embodiments, given as example only.

### BRIEF DESCRIPTION OF THE DRAWINGS

In said figures:
Fig 1 is a schematic view of a pool provided with a device according to the invention;

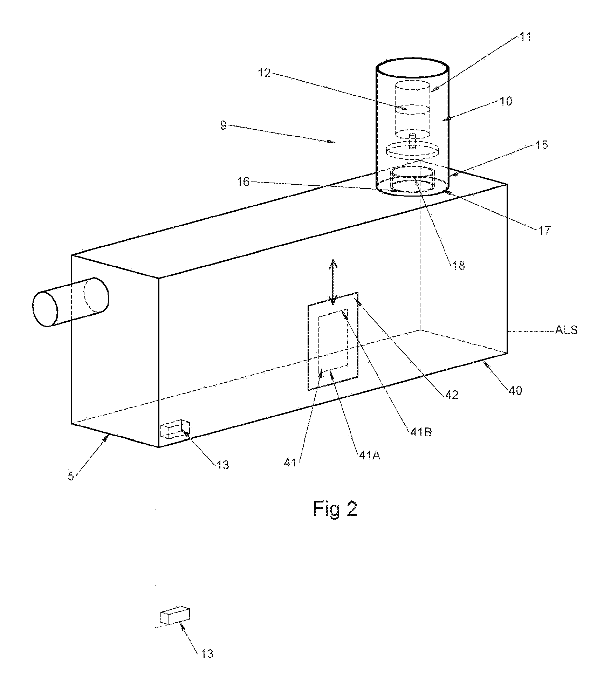

Fig 2 is a perspective view of the caisson;
Fig 3A and 3B are cross section views of the exhaust valve of the caisson, in open and closed position;
Fig 4A and 4B are cross section views of an embodiment of exhaust valve provided with a liquid-air blocking means in open and blocked positions;
Fig 5A, 5B and 5C are views of the pool of figure 1, in different air level within the caisson;
Figure 6 is a schematic view of a pool provided with two distinct caissons.

### DETAILED DESCRIPTION OF PREFERRED EMBODIMENTS

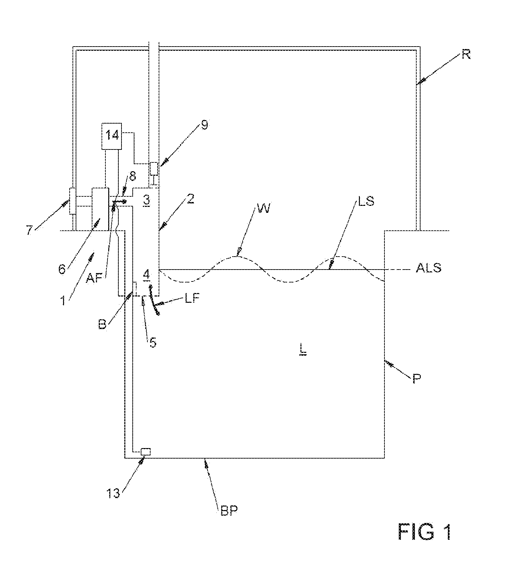

Fig 1 is a schematic view of an adaptive control artificial wave making device 1 for generating wave W with at least one specific wave pattern, at least at the surface LS of a liquid L contained into a pool P located in a room R with an air containing atmosphere having an ambient pressure. The surface LS of the liquid has an average liquid level ALS. The pool P is for example a swimming pool, a treatment basin, an aeration/oxygenation treatment pool, an aquarium, etc. The wave height generated by the device is advantageously lower than 100cm, preferably lower than 50cm, said height being the difference between the maximum level achieved by the wave and the average liquid level in the pool.

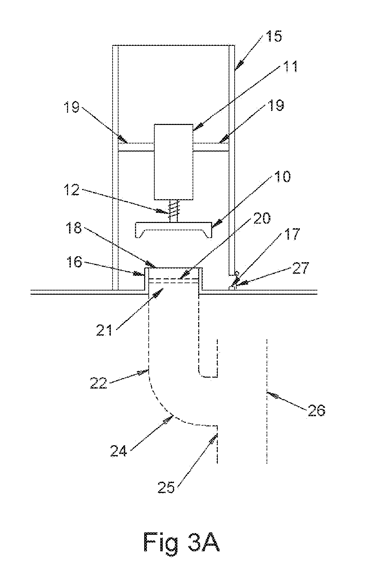

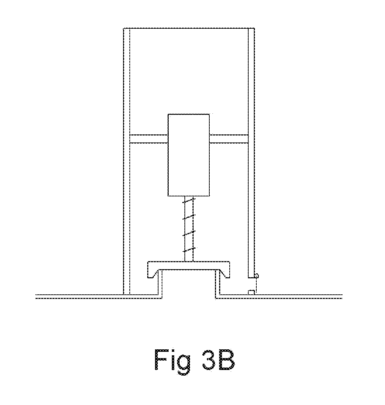

The wave making device 1 comprises at least:
- a caisson 2 adapted to be mounted at least partly into the pool P containing the liquid L possibly with some foam. The caisson 2 having at least an upper portion 3 located above the average liquid level ALS and a bottom portion 4 intended to be immersed in the liquid of the pool below the average liquid level ALS in the pool.
   At least a part of the upper portion 3 of the caisson 2 is adapted to contain air (possibly mixed with one or more other gases, such as oxygen, so as to form oxygen enriched air) when the bottom portion 4 of the caisson is immersed into the liquid of the pool. Said caisson has a bottom 5 provided with an opening adapted, when the caisson 2 is partly immersed into the liquid L of the pool, to form a passage of liquid from the pool towards the caisson, and inversely (arrows LF). Liquid can thus flow in the caisson and out of the caisson. The caisson can possibly be divided in one or more distinct chamber with each one or more openings for the passage of liquid. The bottom 5 of the caisson 2 can be directed towards the bottom BP of the pool P, or to any other direction between the vertical and the horizontal, as long as it is always fully immersed.
- an air blower 6 adapted to create an outlet air flow AF with an over pressure comprised between 0.01 10⁵Pa and 0.5 10⁵Pa above the atmospheric pressure, advantageously an over pressure comprised between 0.05 10⁵Pa and 0.3 10⁵Pa above the atmospheric pressure. The air is advantageously sucked from the outside of the room R, and is for example filtered (filter 7) before entering into the blower 6.
- an air pipe 8 connecting the air blower 6 to the upper portion 3 of the caisson 2, so as to introduce air into the upper portion of the caisson whereby generating in said upper portion of the caisson an air pressure at least equal to the atmospheric pressure, advantageously an over pressure comprised between 0.005 10⁵Pa and 0.5 10⁵Pa above the atmospheric pressure, advantageously an over pressure comprised between 0.01 10⁵Pa and 0.3 10⁵Pa above the atmospheric pressure.
- at least one control valve mechanism 9 connected to the upper portion 3 of the caisson 2. Said control valve mechanism 9 comprises an exhaust valve 10 adapted to move between a closed position (Fig 3B) and a full open position (Fig 3A), and a cylinder 11 adapted to move the exhaust valve 10 and to maintain said exhaust valve into the open position against the action of a return spring 12, while the spring 12 maintains the closed position, as soon as the cylinder is no more working. The control valve mechanism 9 is adapted to ensure continuously air pressure within the caisson 2 at least equal to the ambient pressure, advantageously at an over pressure with respect to the ambient pressure, preferably an over pressure comprised between 0.02 10⁵Pa and 0.3 10⁵Pa above the atmospheric pressure.
- a submersible pressure sensor 13 placed below the bottom opening 5 of the bottom portion 4 of the caisson, at a determined level with respect to the bottom of the caisson, whereby at said determined level, liquid is always present when the caisson is placed in the pool for generating wave, the said submersible sensor measuring a difference of pressure of the liquid at the determined level into the caisson with respect to the ambient pressure and generating an electrical signal function of the measured difference of pressure of less than 100mA, advantageously of less than 50mA. According to a more advantageous embodiment, the sensor 13 is placed within the caisson 2 adjacent to the bottom opening, instead of being placed at the bottom of the pool, vertically below the opening 5 of the caisson 2. It can also be placed on the side of the caisson.
- possibly a converter for converting the electrical signal of the submersible pressure sensor into a converted signal.
- a controlled command system 14 receiving a signal selected from the electrical signal of the submersible pressure sensor and the converted signal, said controlled command system determining the moments when the exhaust valve has to be moved into a position selected from the group consisting of the substantially full open position and partly open positions comprised between the substantially closed position, and/or the moments when the exhaust valve has to be moved into its substantially closed position, for achieving said specific wave pattern, and emits a signal towards the control valve mechanism for commanding the movement of the exhaust valve for achieving said specific wave pattern.

The cylinder 11 is located within the exhaust pipe 15 conducting air towards the outside of the room R.

The valve 10 is adapted to contact the upper surface of a tube 16 fixed on the wall of the caisson 2. This enables to prevent water to flow into the pipe 15 and to collect possible water condensing into the pipe and evacuating said water outside the pipe 15 by an opening 17 of the pipe.

The ratio open surface 18 of the exhaust valve 10 expressed in cm² / volume of the upper portion of the caisson is comprised between 0.005 and 0.05. With such a ratio, it is possible to ensure a rapid exhaust of air from the caisson, when the valve is in open position.

The position of the cylinder 11 within the pipe 15 is maintained by means of arms 19.

For preventing the passage of dust or objects from the caisson towards the pipe 15, the tube can be provided with a gas filter element 20.

The tube 16 or the opening 21 of the caisson 2 can be provided with a piping system 22 (shown in dashed lines in Fig 3A) for preventing the passage of dust or solid floating material. The piping system 22 comprises a vertical tube 23 connected to the opening 21 or tube 16, said vertical tube being provided at its lower end with a curved portion 24 ending with a T portion 25 having an open vertical tube 26. Water can advantageously flow within the tube 26 up to the curved portion 24, when the wave reaches a specific height. In this manner, the tube 26 will remain clean when the wave height is dropping. As the tube is wetted due to the movement of water inside the caisson, dust particles will have the tendency to adhere on the wetted surface when air is exhausted from the caisson, said dust particles being then removed when the wave height in the caisson is dropping.
Said piping system is also advantageous as avoiding, in case of exceptional wave height, a direct contact of water with the valve, and as acting as a means for limiting the passage of water vapour and/or water droplets to the exhaust.

The opening 17 can be provided with a pivotable door 27, so as to enable the passage of water from the pipe 15 towards the outside, but so as to prevent the passage of air from the room R into the pipe 15 through the opening 17.

The open and closed positions of the valve 10 are shown in Fig 3A and 3B.

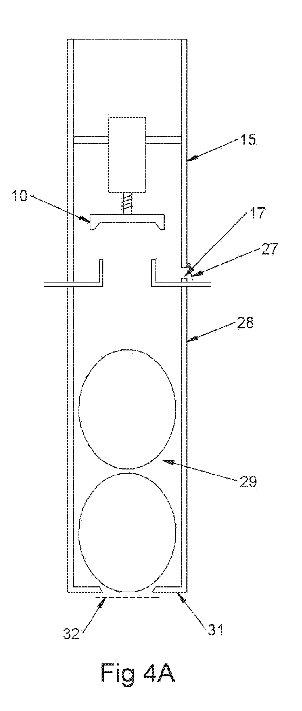

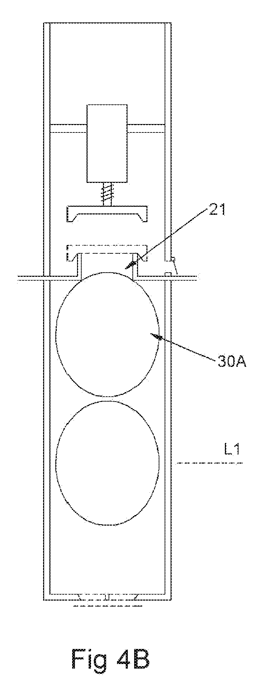

Fig 4A and 4B are views of a control valve mechanism comprising a pipe 28 connecting the valve 10 with the caisson 2, said pipe 28 being provided at its end connected to the caisson, with a liquid blocking system 29 adapted to prevent the passage of liquid and gas towards the valve 10, when the liquid level in the caisson is above a predetermined level L1 (see fig 4B). This is also advantageous for ensuring a minimum air volume within the caisson.
The anti blocking system 29 comprises for example one or more floating elements, such as balls 30. The floating balls are placed in a tube 28 provided at its bottom with arms 31 or a grid 32 for preventing the balls to fall outside the pipe 28, in case the water level of the caisson is too low.

When the water level in the caisson reaches the level L1, the upper ball 30A is pushed against the upper wall of the caisson provided with the opening 21. In said position the ball 30A closes at least partly the opening 21.

The blower is adapted to blow a volume of air of at least 30 litres per second (for example comprised between 100 litres and 500 litres per second) per 200 litres of the upper portion of the caisson.

The bottom of the caisson has an opening 5 having an open surface corresponding to 4% to 7% of the surface LS of the liquid of the pool.

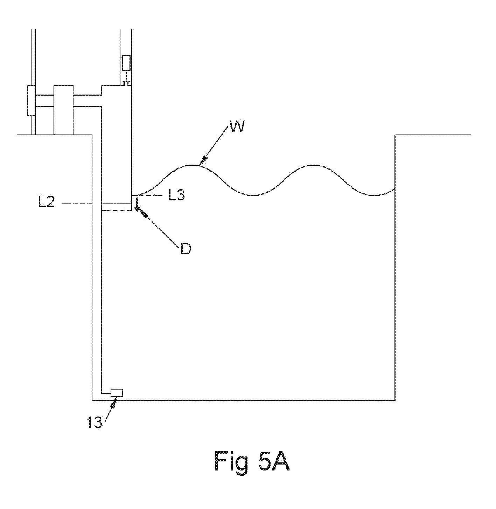

Fig 5A to 5C show different water level within the caisson 2.

In figure 5A, the water level L2 in the caisson is low, and extends advantageously lower than the water level L3 of the water outside the caisson, but adjacent to said caisson. In Figure 5A, the wave W in the pool adjacent to the caisson 2 is intended to further drop (arrow D).

The water level L2 within the caisson is advantageously in advance of phase with respect to the wave phase.

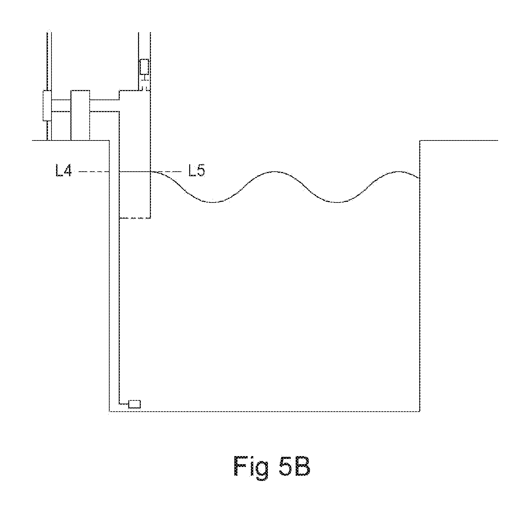

In figure 5B, the water level L4 in the caisson 2 is high, but still lower than the maximum water level L5 outside the caisson 2, but adjacent to the caisson.

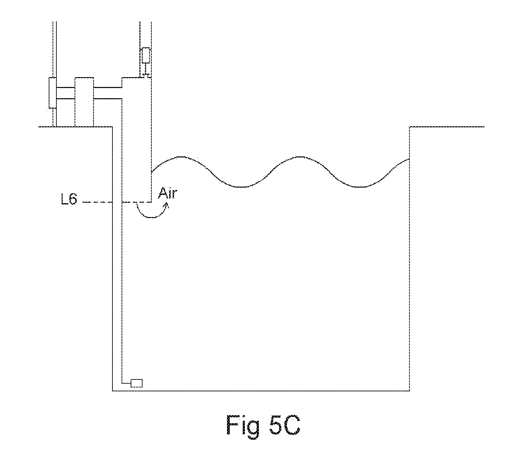

In figure 5C, the water level L6 within the caisson 2 is lowered to below the level of the open bottom 5 of the caisson 2, whereby enabling to expel possible materials attached to the grid 5.

The controlled command system 14 comprises preferably instructions for maintaining the exhaust valve or valves of the caisson in its closed position for a time sufficient so that a sufficient amount of air from the blower is introduced into the caisson, so that part of said air is exhausted into the pool through the bottom opening. This is advantageous for expelling out of the caisson or out of the grid, possible materials or components floating within the caisson or blocking partly the grid. Preferably, the instructions for maintaining the exhaust valve or valves of the caisson in its substantially closed position for a time sufficient so that a sufficient amount of air from the blower is introduced into the caisson are adapted for exhausting air into the pool for at least 1 second to 10 minutes, preferably 5 second to 1 minute, per period of at least 45minutes, advantageously per period comprised between 1hour and 24hours.

This is advantageous for controlling the good working of the blower and of the exhaust valve(s) from time to time.

According to a specific embodiment, the caisson 2 has a lateral vertical wall 40 in contact with the liquid of the pool outside the caisson. Said wall 40 has an opening 41 with a portion 41A at least located below the average liquid level ALS and a portion 41B located above the average liquid level of the pool. Said opening 41 is provided with movable closing means or door 42, for example vertically slidable. Said opening 41 enables the passage of water from the pool into the caisson when the opening is not closed by the movable closing means.

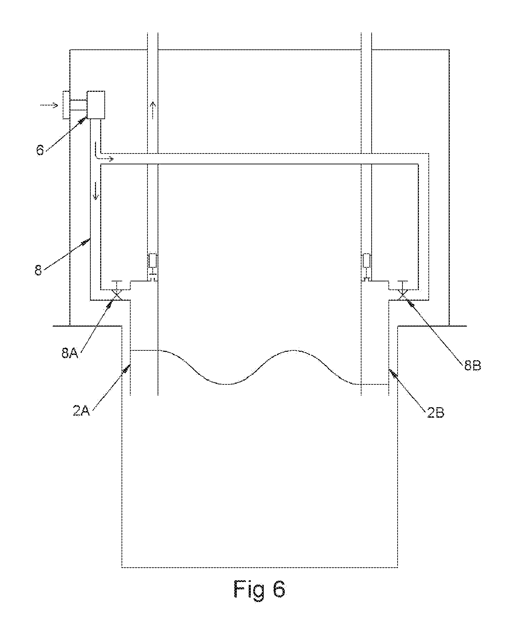

In figure 6, the pool P is provided with two distinct caissons 2A,2B connected to a same air blower 6, through a piping system 8 provided with a valving system 8A for controlling the flow of air towards the first caisson 2A and a valving system 8B for controlling the flow of air towards the second caisson 2B.
Each caisson 2A,2B has at least one control valve mechanism connected to the upper portion of the caisson. Said control valve mechanism comprises:
- an exhaust valve 9 adapted to move between at least a substantially closed position and a substantially full open position, and
- a system 11 adapted to move the exhaust valve and to maintain said exhaust valve into one position selected from the group consisting of the substantially closed position, the substantially full open position and partly open positions comprised between the substantially closed position, the substantially full open position.

The invention also relates to the use of the adaptive control artificial wave making device of the invention for generating artificial wave at the surface of a pool, advantageously located in a room, preferably in a substantially closed room. The air from the caisson is advantageously exhausted outside the room or towards a treatment station.

The artificial wave making device according to this invention may effectively generate continuous artificial wave suitable for aquatic breeding, especially for prawn breeding to accelerate the growing rate of prawn (such as shrimp, crabs, lobsters, *etc*. ) and to increase greatly the output.

The artificial wave making device according to this invention is also suitable for aquarium, sport, recreation, such as for wave building in a swimming pool, and also for medical therapy such as water therapy. The adaptive control artificial wave making device according to this invention has the advantages of a simplified structure, a reasonable control system, a low energy consumption and wide application.

## Claims

1. An adaptive control artificial wave making device for generating wave with at least one specific wave pattern, at least at the surface of a liquid contained into a pool located in an air containing atmosphere having an ambient pressure, said surface of the liquid having an average liquid level, said wave making device comprising at least:
- a caisson adapted to be mounted at least partly into a pool containing a liquid, said caisson having at least an upper portion and a bottom portion intended to be immersed in the liquid of the pool below the average liquid level in the pool, wherein at least a part of the upper portion of the caisson is adapted to contain air when the bottom portion of the caisson is immersed into the liquid of the pool, and wherein said caisson having a face, advantageously a bottom provided with an opening adapted, when the caisson is partly immersed into the liquid, a passage of liquid from the pool towards the caisson, and inversely;
- an air blower adapted to create an outlet air flow with an over pressure comprised between 0.01 10⁵Pa and 0.5 10⁵Pa above the atmospheric pressure, advantageously an over pressure comprised between 0.05 10⁵Pa and 0.3 10⁵Pa above the atmospheric pressure;
- an air pipe connecting the air blower to the upper portion of the caisson, so as to introduce air into the upper portion of the caisson whereby generating in said upper portion of the caisson an air pressure at least equal to the atmospheric pressure, advantageously an air over pressure comprised between 0.05 10⁵Pa and 0.5 10⁵Pa above the atmospheric pressure, advantageously an over pressure comprised between 0.01 10⁵Pa and 0.3 10⁵Pa above the atmospheric pressure;
- at least one control valve mechanism connected to the upper portion of the caisson, said control valve mechanism comprising an exhaust valve adapted to move between at least a substantially closed position and a substantially full open position, and a system adapted to move the exhaust valve and to maintain said exhaust valve into one position selected from the group consisting of the substantially closed position, the substantially full open position and partly open positions comprised between the substantially closed position, the substantially full open position, whereby said control valve mechanism is adapted to ensure continuously air pressure within the caisson at least equal to the ambient pressure,
- a pressure sensor for determining a liquid pressure or a difference of pressure at a liquid level of the caisson or vertically below the bottom opening of the caisson, advantageously a submersible pressure sensor placed in the bottom portion of the caisson or below the bottom opening of the bottom portion of the caisson, at a determined level with respect to the bottom of the caisson, whereby at said determined level, liquid is always present when the caisson is placed in the pool for generating wave, the said submersible sensor measuring a difference of pressure of the liquid at the determined level into the caisson with respect to the ambient pressure and generating advantageously an electrical signal function of the measured difference of pressure, especially an electrical signal of less than 100mA, advantageously of less than 50mA;
- possibly a converter for converting the electrical signal of the submersible pressure sensor into a converted signal; and
- a controlled command system receiving a signal selected from the electrical signal of the submersible pressure sensor and the converted signal, said controlled command system determining the moments when the exhaust valve has to be moved into a position selected from the group consisting of the substantially full open position and partly open positions comprised between the substantially closed position, and/or the moments when the exhaust valve has to be moved into its substantially closed position, for achieving said specific wave pattern, and emits a signal towards the control valve mechanism for commanding the movement of the exhaust valve for achieving said specific wave pattern.

2. The adaptive control artificial wave making device of claim 1, in which the system adapted to move the exhaust valve and to maintain said exhaust valve into one position selected from the group consisting of the substantially closed position, the substantially full open position and partly open positions comprised between the substantially closed position comprises at least one cylinder, said cylinder acting advantageously against the action of a return mechanism, said return mechanism being advantageously adapted for directing the valve towards its substantially closed position.

3. The adaptive control artificial wave making device of claim 2, in which the caisson is provided with an exhaust pipe for the exhaust of air from the caisson, whereby the cylinder is located within the exhaust pipe.

4. The adaptive control artificial wave making device of any one of the claims 1 to 3, in which the ratio open surface of the exhaust valves or valves expressed in cm² / volume of the upper portion of the caisson is greater than 0.0005, advantageously greater than 0.001, preferably comprised between 0.005 and 0.05.

5. The adaptive control artificial wave making device of any one of the claims 1 to 4, in which the control valve mechanism comprises a pipe connecting the valve with the caisson, said pipe being provided at its end connected to the caisson, with a liquid blocking system adapted to prevent the passage of liquid and gas towards the valve, when the liquid level in the caisson is above a predetermined level.

6. The adaptive control artificial wave making device of any one of the claims 1 to 5, in which the bottom of the caisson is open, said bottom being provided with a series of elements defining passages with a maximum width or diameter of less than 10cm.

7. The adaptive control artificial wave making device of any one of the claims 1 to 6, in which the blower is adapted to blow a volume of air of at least 30 litres per second per 200 litres of the upper portion of the caisson.

8. The adaptive control artificial wave making device of any one of the claims 1 to 7, in which the bottom of the caisson has an opening having an open surface corresponding to 3% to 20% of the surface of the liquid of the pool.

9. The adaptive control artificial wave making device of any one of the claims 1 to 8, in which the pool is located in a room, and in which the device comprise an exhaust pipe for exhausting air from the caisson outside the said room.

10. The adaptive control artificial wave making device of any of the claims 1 to 9, in which the controlled command system comprises instructions for maintaining the exhaust valve or valves of the caisson in its substantially closed position for a time sufficient so that a sufficient amount of air from the blower is introduced into the caisson, so that part of said air is exhausted into the pool through the bottom opening.

11. The adaptive control artificial wave making device of claim 10, in which the instructions for maintaining the exhaust valve or valves of the caisson in its substantially closed position for a time sufficient so that a sufficient amount of air from the blower is introduced into the caisson are adapted for exhausting air into the pool for at least 1 second to 10 minutes, preferably 5 second to 1 minute, per period of at least 45minutes, advantageously per period comprised between 1hour and 24hours.

12. The adaptive control artificial wave making device of any one of the claims 1 to 11, in which the caisson has a lateral wall in contact with the liquid of the pool outside the caisson, the said wall having an opening with a portion at least located below the average liquid level and an opening with a portion located above the average liquid level of the pool, or having at least a first opening located above the average liquid level of the pool and a second opening located below the average liquid level, and in which the said opening or openings are provided with movable closing means, whereby enabling the passage of water from the pool into the caisson when the opening or openings are not closed by the movable closing means.

13. The adaptive control artificial wave making device of any one of the claims 1 to 12, which comprises at least one filtering means or a treatment unit for filtering or treating air flowing into the blower and/or pushed by the blower.

14. The adaptive control artificial wave making device of any one of the claims 1 to 13, which comprises at least two distinct caissons connected to a same air blower through a piping system provided with a valving system for controlling the flow of air towards the first caisson and the flow of air towards the second caisson, whereby each caisson has at least one control valve mechanism connected to the upper portion of the caisson, said control valve mechanism comprising an exhaust valve adapted to move between at least a substantially closed position and a substantially full open position, and a system adapted to move the exhaust valve and to maintain said exhaust valve into one position selected from the group consisting of the substantially closed position, the substantially full open position and partly open positions comprised between the substantially closed position, the substantially full open position.

15. The use of the adaptive control artificial wave making device of any one of the preceding claims for generating artificial wave at the surface of a pool located in a room, in which the air from the caisson is exhausted outside the room or towards a treatment station.
